Europäisches Patentamt

European Patent Office

Office européen des brevets

(11) Publication number: 0 369 662
A2

# EUROPEAN PATENT APPLICATION

(21) Application number: 89311457.9

(51) Int. Cl.5: **G08B 13/14**

(22) Date of filing: **06.11.89**

(30) Priority: **18.11.88 GB 8827006**

(43) Date of publication of application:
**23.05.90 Bulletin 90/21**

(84) Designated Contracting States:
**AT BE CH DE ES FR GR IT LI LU NL SE**

(71) Applicant: **MARCONI ELECTRONIC DEVICES LIMITED**
**Doddington Road**
**Lincoln LN6 3LF(GB)**

(72) Inventor: **Harden, Paul**
**80 Ridge Nether Moor**
**Swindon Wiltshire, SN3 6NR(GB)**
Inventor: **Swann, Kevin**
**21 Manor Orchard**
**Cricklade Wiltshire, SN6 6EA(GB)**

(74) Representative: **Hoste, Colin Francis**
**The General Electric Company p.l.c. Central**
**Patent Department (Wembley Office) Hirst**
**Research Centre East Lane**
**Wembley Middlesex, HA9 7PP(GB)**

(54) Location monitoring of movable objects.

(57) A portable object whose location is to be monitored includes a battery for powering electronic communication equipment housed within the object. The object typically can take the form of a tag for attachment to a person, and to prevent interference with the communication equipment, the battery is sealed into the housing. When discharged the battery can be recharged by placing it in proximity to an inductive charging circuit, which requires no direct electrical connection or contact.

EP 0 369 662 A2

Fig.1

## Location Monitoring of Movable Objects

This invention relates to the monitoring of the location of movable objects, and is particularly suitable for the electronic monitoring of the location of tags or the like which can be attached to persons or to high value items. A movable object, such as a tag, can communicate with a nearby terminal point at regular intervals to confirm that it is still in the vicinity, or the terminal point can transmit a signal to the movable object which can either signal its response automatically or alert a person to the fact that a response is required. Such operations by a movable object such as a tag, which incorporates electronic circuits and devices, requires the consumption of electric power which is most conveniently provided by battery cells. For a number of reasons, including those of security, it is highly desirable that the movable object shall be a tamper-proof sealed unit, but this of course makes difficult the replacement of an expired battery cell. It is desired to permit the recharging of an electric battery sealed into a movable object without the need to remove the battery from the movable object.

According to this invention, a system for the electronic monitoring of the location of a movable object, includes a portable object having a rechargeable battery located therein; a base unit having a power source and an inductor associated therewith arranged to cooperate with an inductor mounted in the portable object when the portable object is placed close to the base unit so as to cause recharging of the battery without the need to make a physical electrical contact.

Thus, the system in accordance with the invention can be termed a contactless charging system since it utilises the electromagnetic field coupling which occurs between the two inductors, which act as two loosely coupled windings of a transformer.

Preferably each inductor forms the inductive frequency determining component of respective tuned circuits, each inductor also constituting a respective winding of a loosely coupled transformer, so as to permit the transfer of power from one tuned circuit to the other.

The casing of the portable object is of a material, such as a plastics material, which does not adversely affect the electromagnetc coupling between the two inductors.

Preferably means are provided for aligning and locating the portable object in close proximity with the base unit so as to ensure that the two inductors are aligned with each other.

Typically each resonant circuit is tuned to approximately 300kHz; it is found that at such a frequency power can be readily and efficiently transferred from one tuned circuit to another. Furthermore, this frequency permits the use of reactive components which are of sufficiently small size to fit conveniently within a portable object such as a tag.

Preferably the portable object includes means for protection against inadvertent short circuiting of a charged battery. Conveniently the portable object also includes means for monitoring the state of charge of the battery, and for generating an output signal when the charge level falls below a certain value.

The invention is further described by way of example with reference to the accompanying drawing, in which:

Figure 1 shows relevant parts of the circuits which form part of a portable object and a base station; and

Figure 2 is an explanatory diagram illustrating one representation of the portable object and the base station.

Referring to the drawings, there is shown part of a portable item 1, which takes the form a tag which can be attached to the ankle, wrist or waist of a person so as to monitor his location. Typically the person is required to remain within a localised area during certain times, and this can be verified by causing the tag to transmit short range radio signals or the like to a terminal unit which in turn can forward the signals via a telephone line to a central control unit. If the person leaves the designated localised area, the strength of the radio signal received at the terminal unit falls below a threshold value and so effectively ceases. This triggers an alarm at the central control unit so that remedial action can be initiated.

The tag includes a number of electric batteries 2 which provide the source of power for the electronic circuits mounted within the tag. These batteries periodically discharge, and when the available voltage falls below a threshold value, a voltage detector 3 generates an alarm signal.

The tag is then removed from the person to which it was attached, and placed on a base unit which generates a charging signal to recharge the batteries 2.

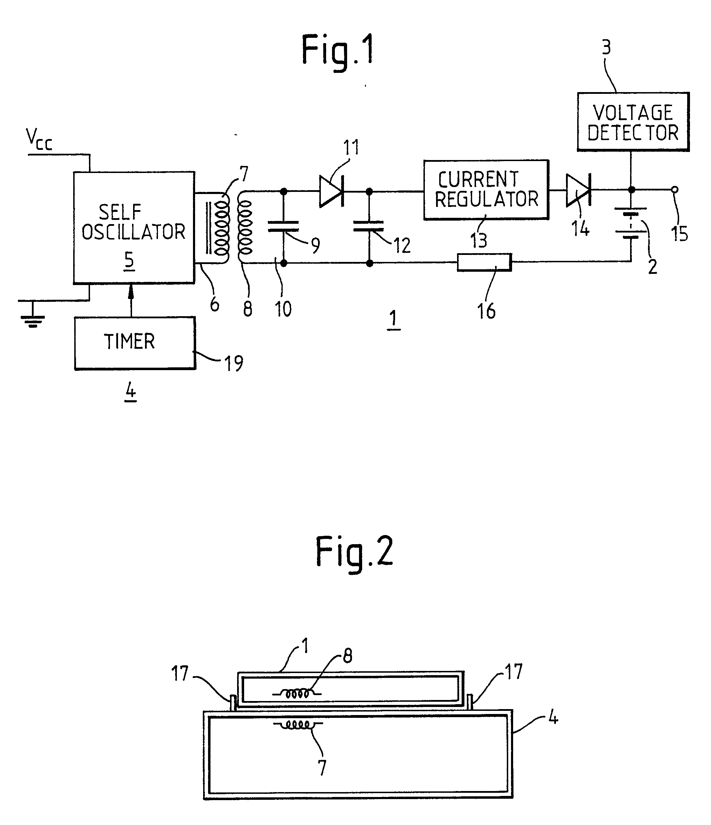

The base unit 4 includes a self oscillator 5 arranged to generate a charging signal at a high frequency of 300kHz, the frequency of oscillation comprising a tuned circuit 6 having an inductor 7 and also capacitance (not separately shown). The inductor 7 is placed closely adjacent to the underside of the top casing of the base unit 4, so that it is loosely coupled to a similar inductor 8 which forms part of the portable item 1. This inductor 8, together with a capacitor 9 forms part of a resonant circuit 10, which is also tuned to 300kHz. The inductor 8 is placed closely adjacent to the casing of the portable item 1, as depicted in Figure 2, so that the two inductors 7 and 8 constitute a loosely coupled transformer. Each inductor is wound on a small ferrite core in order to enhance the transformer action.

The current induced in the resonant circuit 10 from the self oscillator 5 is rectified by a diode 11 and smoothed by a large storage capacitor 12. The smoothed current is fed via a current regulator 13 and a blocking diode 14 to the batteries 2 to recharge them. The current regulator 13 serves to limit the charging current to a predetermined safe value. The purpose of the blocking diode 14 is to prevent discharge of the batteries via the charging circuit when the portable item 1 is removed from the base unit 4.

The timer 19 is set to determine a suitable charging period, which ensures that the batteries are fully charged. When charging is complete, and the portable unit 1 is removed from the base unit 4, the batteries are used to power electronic circuits (not shown) via terminal 15. A series resistor 16 acts to prevent an excessive discharge current flowing in the event that a fault develops, thereby preventing overheating which might damage or injure an article or person to which the portable item 1 is attached in use.

The casings of the portable item 1 and the base unit 4 are composed of a material, such as a plastics material, which does not impede the electromagnetic field coupling between the two inductors 7 and 8. It will be appreciated that these inductors constitute the windings of a loosely coupled transformer as well as being part of the frequency determining components which constitute the resonant circuits tuned to 300kHz. In order to ensure that the two inductors 7 and 8 are correctly aligned in close proximity to each other whilst charging takes place, the base unit 4 is provided with pegs, of which only a single peg 17 is visible in Figure 2, which cooperate with the outline of the portable unit.

The electronic circuit carried by the portable unit 1 carries a transmitter, such as a radio or infrared transmitter, which is used to enable the location of the portable unit to be monitored by a remote control unit. This transmitter is also used to signal an alarm when the potential on the batteries 2 falls below a usable threshold value; such a signal is initiated by the low voltage detector 3.

## Claims

1. A system for the electronic monitoring of the location of a movable object including a portable object having a rechargeable battery located therein; characterised by a base unit (4) having a power source (5) and an inductor (7) associated therewith arranged to cooperate with an inductor (8) mounted in the portable object (1) when the portable object is placed close to the base unit so as to cause recharging of the battery (2) without the need to make a physical electrical contact.

2. A system as claimed in Claim 1 and wherein each inductor forms the inductive frequency determining component of respective tuned circuits, each inductor also constituting a respective winding of a loosely coupled transformer, so as to permit the transfer of power from one tuned circuit to the other.

3. A system as claimed in Claim 1 or 2 and wherein the portable object is provided with a casing composed of a material which does not adversely affect the electromagnetic coupling between the two inductors.

4. A system as claimed in Claim 1, 2 or 3 and wherein means are provided for aligning and locating the portable object in close proximity with the base unit so as to ensure that the two inductors are aligned with each other.

5. A system as claimed in Claim 2 and wherein each of the tuned circuits is tuned to approximately 300 kHz.

6. A system as claimed in any of the preceding claims and wherein the portable object includes means for protection against inadvertent short circuiting of a charged battery.

7. A system as claimed in any of the preceding claims and wherein the portable object includes means for monitoring the state of charge of the battery, and for generating an output signal when the charge level falls below a certain value.

8. A system for the electronic monitoring of the location of a movable object substantially as illustrated in and described with reference to the accompanying drawings.

# Fig.1

# Fig.2